# EUROPEAN PATENT APPLICATION

(11) **EP 4 566 781 A1**
(43) Date of publication of application: **11.06.2025**
(21) Application number: 23214741.3
(22) Date of filing: 06.12.2023
(51) Int. Cl.: B28B 1/00, B33Y 10/00, B33Y 80/00

(54) **METHOD OF PRODUCING AN OBJECT WITH A CIRCUMFERENTIAL SIDE WALL AND A BASE BY 3D PRINTING A CURABLE MINERAL BINDER COMPOSITION AND OBJECT OBTAINABLE BY THIS METHOD**

(71) Applicant: Sika Technology AG, 6340 Baar (CH)
(72) Inventor: LOOTENS, Didier, 6010 Kriens (CH); BERNARD, Mylène, 8952 Schlieren (CH); TROUSSET, Léon, 8049 Zürich (CH)
(74) Representative: Sika Patent Attorneys

(57) **Abstract**

The invention relates to a method for producing on a surface (3, 12) a curable mineral binder based 3D object (2) having a circumferential side wall (8, 10, 15, 18) and a base with an additive manufacturing device (1), the method comprising the steps of: producing the circumferential side wall (8, 10, 15, 18) by applying, at a non-zero angle relative to the surface (3, 12), a plurality of layers of a first curable mineral binder composition with a movable printing head (4) of the additive manufacturing device (1); producing the base by applying onto the surface (3, 12) at least one of the first curable mineral binder composition and a second curable mineral binder composition with the movable printing head (4); wherein producing the circumferential side wall and producing the base are carried out such that the base is abutting the circumferential side wall. A curable mineral binder based 3D object obtainable by this method is also claimed.

## Description

### Technical Field

The invention relates to a method for producing a curable mineral binder-based 3D object having a circumferential side wall and a base with an additive manufacturing device and to a curable mineral binder-based 3D object.

### Background Art

In the construction industry, curable binder compositions, such as e.g. mineral binder compositions, are widely used for various applications. Examples of such compositions are mortar, concrete, grout, shotcrete, and screed compositions.

Attempts have been made for some time to produce geometrically demanding construction elements using additive manufacturing processes. The term "additive manufacturing process" or "additive production" refers to processes in which a 3D object is produced by the targeted spatial deposition, application and/or solidification of material.

The deposition, application and/or consolidation of the material, e.g. the curable binder composition, is carried out particularly on the basis of a data model of the object to be generated and especially layer-by-layer. Thus, in the additive manufacturing process, each object is typically produced from one or more layers. Usually, a formless material (e.g. liquids, powders, granulates, etc.) and/or a form-neutral material (e.g. tapes, wires) is used to manufacture an object, which is subjected in particular to chemical and/or physical processes (e.g. melting, polymerizing, sintering, curing). Additive manufacturing processes are also referred to as "generative manufacturing processes" or "3D printing", among others.

Additive manufacturing in the construction sector is quickly developing and projects involving this technology are becoming more and more ambitious.

However, producing 3D objects having a circumferential side wall and a base from cementitious materials, such as mortars or concrete, by additive manufacturing is a highly demanding task. Some objects like decorative plant bowls, e.g. particularly flowerpots, are typically produced without a base so that they need to be placed at their intended place in the garden and then filled up with soil and plants. Because of the missing base, relocating the bowl is difficult if not impossible.

Other types of 3D objects, such as walls, pillars, or columns of buildings may have a 3D printing layers look from the outside for decorative purposes but need to have solid inside structure to the required bearing strength. Filling up these hollow 3D printed bodies is a time and labor consuming task involving many manual steps, thus causing delay, and posing a risk for errors to occur. Furthermore, producing 3D objects with a solid bottom by extrusion-based additive manufacturing techniques is generally problematic since unlike in 3D printing of plastic materials, the printing process cannot be easily stopped at one position and continued at another position. Consequently, producing 3D articles with a solid base and a circumferential side wall from a curable binder composition, particularly a curable mineral binder composition, using a continuous 3D printing process has until now been very challenging.

There is therefore need for new and improved solutions that overcome the aforementioned disadvantages as far as possible.

### Summary of the Invention

It is an object of the present invention to provide improved solutions for producing a curable mineral binder-based 3D object having a circumferential side wall and a base with an additive manufacturing device. Particularly, the solution should allow for producing said 3D objects in a way as automated as possible so that susceptibility to error, complexity, and duration of the production process can be significantly reduced.

It was found that these objects can be achieved surprisingly well with the method according to independent claim 1.

The invention relates to a method for producing on a surface a curable mineral binder-based 3D object having a circumferential side wall and a base with an additive manufacturing device, the method comprising the steps of:
a) producing the circumferential side wall by applying, at a non-zero angle relative to the surface, a plurality of layers of a first curable mineral binder composition in the setting state with a movable printing head of the additive manufacturing device and
b) producing the base by applying onto the surface at least one of the first curable mineral binder composition in the setting state and a second curable mineral binder composition in the setting state with the movable printing head,
wherein producing the circumferential side wall and producing the base are carried out such that the base is abutting the circumferential side wall.

The first curable mineral binder composition in the setting state is, particularly, curing faster than the second curable mineral binder composition in the setting state. In other words, the first composition has a relatively stable and firm consistency when it comes out of the printing head, whereas the second composition is more liquid and needs longer time to harden. "Abutting" means that the material of the circumferential side wall and the material of the base are connected or linked.

The term "additive manufacturing" refers to methods in which a three-dimensional object is produced by selective three-dimensional deposition, application and/or solidification of material. In this process, the deposition, application and/or solidification of the material takes place particularly based on a data model of the object to be produced, and particularly in layers or sheets. In an additive manufacturing method, each object is typically produced from one or a plurality of layers. Accordingly, an additive manufacturing device is a device capable of performing such methods.

The additive manufacturing device used in the present invention in particular performs a generative free space additive manufacturing process. This means that the three-dimensional object is formed layer by layer, namely by applying the first curable mineral binder composition only at those points where the three-dimensional object is to be formed. In the case of overhangs and/or cavities, a support structure can optionally be provided. Free-space processes have proved to be particularly advantageous in connection with the production of three-dimensional objects having at least one recess comprising at least one of a hole or cavity from curable mineral binder compositions. In contrast, in powder bedding or liquid processes, for example, the entire space is typically filled and the material is then selectively solidified at the desired locations.

For applying the first curable binder composition in the setting state, the printing head is in particular controlled on the basis of a structural data model of the three dimensional object. The structural data model may be stored in a memory module of a control unit of the additive manufacturing device.

A "curable mineral binder composition" refers to a material, which comprises a mineral binder and which after addition of mixing water, can cure by chemical reactions to form a solid.

The term "mineral binder" refers in particular to a binder which reacts in the presence of water in a hydration reaction to form solid hydrates or hydrate phases. This can be, for example, a hydraulic binder (e.g. cement or hydraulic lime), a latent hydraulic binder (e.g. slag), a pozzolanic binder (e.g. fly ash) or a non-hydraulic binder (e.g. gypsum or white lime).

A "mineral binder composition" is accordingly a composition containing at least one mineral binder. In particular, it contains the binder, aggregates and/or one or more additives. Aggregates may be, for example, gravel, sand (in natural and/or processed, e.g. crushed, form) and/or filler. The mineral binder composition is particularly a fluid mineral binder composition mixed with mixing water.

The expression "the curable binder composition in the setting state" particularly means that the curable binder composition is in a condition in which the setting of the binder in the curable binder composition has started but is not yet complete. In case of a mineral binder compositions, the compositions are in the setting state after mixing the mineral binder and optionally further components, such as e.g. aggregates, with the mixing water.

In some embodiments, producing the base is carried out by applying the first curable mineral binder composition in the setting state. The first curable mineral binder composition in the setting state is preferably used to "print" the base, i.e. applied by the printing head in a coordinated and specific manner at defined locations.

The first curable mineral binder composition in the setting state can for example be applied on the surface in a serpentine pattern until the whole area of the planned base is put into shape with material.

In some embodiments, however, producing the base includes spirally moving the printing head while applying the first curable mineral binder in the setting state. Spirally printing the base may be carried out using outside-in or inside-out pattern. This may be especially advantageous for printing of circular bases. The spirals are particularly shaped according to the shape of the first layer of the circumferential side wall. In case of bases with complex outlines other than circles, this may lead to gaps in the base that can optionally be filled with selective applications of the first curable mineral binder composition in the setting state. The gaps may, however, also be filled by applying the second curable mineral binder composition in the setting state.

Producing the base can be carried out before producing the whole circumferential side wall or after, especially directly after, at least one layer of the first curable mineral binder composition in the setting state for producing the circumferential side wall has been applied. The first layer of the first curable mineral binder composition can also be seen as being part of the base, so that, particularly, producing the base includes producing the first layer of the circumferential side wall.

In some exemplary embodiments, the printing process can be started by producing the base from a center of the yet-to-be-made object, wherein the printing head is spirally moved outwards towards the outline of the first layer of the circumferential side wall while applying the first curable mineral binder composition in the setting state. The production process then transitions, particularly uninterruptedly, into the production of the circumferential side wall, which is erected by printing layer after layer. The layers do not have to be exactly arranged on top of each other, but with each layer, the outline of the circumferential side wall may be altered to allow individual shapes. This procedure may lead to a gapless base or to a base with at least one gap.

In yet some other embodiments, producing the base is carried out after, especially directly after at least one layer of the circumferential side wall has been applied, and is carried out by applying the second curable mineral binder composition in the setting state in the interior of the at least one layer of the circumferential side wall. The second curable mineral binder composition in the setting state is particularly applied on the surface until it spreads all over the area defined by the first layer of the circumferential side wall. Optionally, the second curable mineral binder composition can be filled further up to increase the thickness of the base.

Especially, for achieving a self-leveling effect, the second curable mineral binder composition in the setting state has a lower viscosity and yield stress than the first curable mineral binder composition in the setting state. Specifically, the second curable mineral binder composition in the setting state may contain a different concentration of at least one type of additive affecting the viscosity/yield stress and/or curing time of a mineral binder composition, e.g. a lower concentration of an accelerator, than the first curable mineral binder composition in the setting state.

Said at least one layer of the circumferential side wall thus serves as limiter or boundary for the low viscosity/low yield stress second curable mineral binder composition. The maximum filling height (or: base thickness) for the time being depends on how high the circumferential side wall is when second curable mineral binder composition in the setting state is applied. The base could be a relatively thin layer providing a stable base for the circumferential side wall or could be a filling that fills up a significant portion of or the whole 3D object.

In some embodiments, the first curable mineral binder composition and the second curable mineral binder composition are based on the same type of mineral binder. The main difference or even the only difference between the first and second curable mineral binder composition may then be the at least one type of additive and/or the concentration of the at least one type of additive affecting the viscosity/yield stress and/or curing time of a mineral binder composition. This ensures that the two materials are compatible and have good chemical bond. In some embodiments, the first and second mineral binder compositions in the setting state differ by having a different concentration of at least one type of an additive, particularly of an accelerator.

In some embodiments, the surface has at least one recess comprising at least one of a hole, an undercutting, a subtractively manufactured structure, or a drilling. In a particular embodiment, the recess is a plurality of drillings of which at least one is not running vertically, but with a certain angle relative to the surface.

In some embodiments, producing the base includes producing a circumferential element onto the surface and in the interior of the at least one layer of the circumferential side wall by applying the first curable mineral binder composition in the setting state with the movable printing head of the additive manufacturing device. The circumferential element consists, as does the circumferential side wall, of at least one layer. The circumferential element is surrounded by the circumferential side wall. The space between the circumferential side wall and the circumferential element is filled by the second curable mineral binder composition in the setting state, therefore the circumferential element serves as boundary for the second curable mineral binder composition to make sure that the area inside the circumference of the circumferential element is spared from being filled with the second curable mineral binder composition. A hole formed in the area inside the circumference of the circumferential element can e.g. serve as a drain, particularly for evacuating water that may accumulate inside the 3D object, especially in outdoor applications.

In some embodiments, producing the base includes detecting with a sensor an actual level of the applied second curable mineral binder composition relative to the surface. This is especially useful for embodiments of the inventive method, where the base needs to have a defined thickness or where the base is indeed a complete fill of the volume that is encircled by the circumferential side wall, wherein based on a currently measured height (fill level), the application rate of the second curable mineral binder composition in the setting state can be controlled, e.g. by a computer or a control unit.

In some embodiments, the surface is provided by a 3D shaped support element. Such a support element can preferably be a disposable item that temporarily serves as a casting mold to give the base a desired shape or structure, e.g. legs that provide a desired space between the actual bottom of the 3D object and a ground on which the 3D object is placed.

In other embodiments, especially in case of, but not limited to, a flat surface, the surface could be a floor at a construction site or a work top for the additive manufacturing device.

In some embodiments, producing the base includes circularly moving the movable printing head while applying at least one of the first curable mineral binder composition in the setting state and the second curable mineral binder composition in the setting state. In case of the first curable mineral binder composition, circular moving pattern may result into a consistent circular disc that forms the base of the 3D object. In case of the second curable mineral binder composition, the circular movement of the printing head may ensure an even distribution and/or leveling of the composition throughout the interior of the circumferential wall.

Unless specified otherwise, in the present case, the general expression "curable mineral binder composition" without further specification refers to both the first and the second curable binder composition.

The mineral binder comprised in the curable mineral binder composition is preferably selected from the group consisting of cement, gypsum, burnt lime, slag, and fly ash, and mixtures thereof. The curable mineral binder composition preferably comprises at least one hydraulic binder, preferably a cementitious binder.

The hydraulic binder is preferably selected from the group consisting of Portland cement, calcium aluminate cement, calcium sulfoaluminate cement, and mixtures thereof.

The cement used may be any available cement type or a mixture of two or more cement types, examples being the cements classified under DIN EN 197-1: Portland cement (CEM I), Portland composite cement (CEM II), blast furnace slag cement (CEM III), pozzolanic cement (CEM IV), and composite cement (CEM V). Cements produced according to an alternative standard, such as the ASTM standard or the Indian standard, for example, are of course equally suitable. Particularly preferred is a cement according to DIN EN 197-1, a calcium sulfoaluminate cement, a calcium almninate cement, or mixtures thereof, optionally in a mixture with calcium sulfate.

The most preferred is Portland cement or a cement including Portland cement according to DIN EN 197-1. Portland cement is particularly readily available and allows mortars to have good properties.

Also especially suitable are mixtures of Portland cement, calcium aluminate cement, and calcium sulfate, or mixtures of cement and calcium sulfoaluminate cement. Such binder mixtures allow short setting times and high early strengths.

The curable mineral composition preferably further comprises aggregates, especially mineral aggregates. Aggregates are chemically inert, solid, particulate materials and are available in various shapes, sizes, and as different materials, varying from extremely fine particles of sand to large coarse stones. All aggregates typically employed for concrete and mortar are suitable in principle.

Examples of particularly suitable fillers are rock particle size fractions, gravel, sand, especially silica sand and limestone sand, comminuted stones, calcined pebbles, or lightweight fillers such as expanded clay, expanded glass, foamed glass, pumice, perlite, and vermiculite. Other advantageous aggregates are calcium carbonate, aluminum oxide, amorphous silica (silica fume), or crystalline silica (quartz flour).

The particle size is guided by the application and is situated in the range from 0.1 mm to 32 mm or more. Preference is given to mixing different particle sizes in order to provide optimum establishment of the properties of the curable mineral binder composition. Aggregates composed of different materials can also be mixed. The particle size may be determined by means of sieve analysis.

Preferred aggregates are those having particle sizes of not more than 8 mm, more preferably not more than 5 mm, more preferably still not more than 3.5 mm, most preferably not more than 2.2 mm.

The curable mineral binder composition preferably comprises aggregates of which at least 30 wt %, more preferably at least 40 wt %, most preferably at least 50 wt % are smaller than 2 mm, preferably smaller than 1 mm, more preferably smaller than 0.5 mm, based on a total amount of 100 wt % of all aggregates in the curable mineral binder composition. Suitable aggregates of low particle size are, in particular, fine silica sands or calcium carbonate powders.

Curable mineral binder compositions having such particle sizes are readily conveyable, can be mixed well in mixers, especially dynamic mixers.

There are specific applications in which aggregates having particle sizes of up to 32 mm may also be used, more preferably up to 20 mm, most preferably up to 16 mm.

Especially, the first and/or the second curable mineral binder composition includes one or more additive(s).

As for example, the additive is a concrete admixture and/or a mortar admixture and/or a process chemical. The additive more particularly comprises a wetting agent, a die, a preservative, a plasticizer, a retarder, an accelerator, a polymer, a rheological assistant, a viscosity modifier, a pumping assistant, a shrinkage reducer, or a corrosion inhibitor, or combinations thereof.

A proportion of the additive particularly is from 0.001 - 15 wt.%, especially 0.01 - 10 wt.% with respect to the total weight of the curable mineral binder composition.

Especially preferred, in the first curable mineral binder composition, the additive is selected from accelerators and/or plasticizers.

An accelerator comprises for example at least one compound selected from the group consisting of amino alcohols, alkali metal and alkaline earth metal nitrates, alkali metal and alkaline earth metal nitrites, alkali metal and alkaline earth metal thiocyanates, alkali metal and alkaline earth metal halides, alkali metal and alkaline earth metal carbonates, glycerol, glycerol derivatives, glycols, glycol derivatives, aluminum salts, aluminum hydroxides, alkali metal and alkaline earth metal hydroxides, alkali metal and alkaline earth metal silicates, alkali metal and alkaline earth metal oxides, crystallization nuclei, and mixtures thereof.

An accelerator is preferably metered in an amount such that curable mineral binder composition remains readily processable and/or shapeable for several seconds to several minutes. Thereby, layers of the curable mineral binder composition can be applied uniformly whereby said layers develop a good cohesion. Additionally, the surface of the produced 3D object can, if desired, be subsequently subjected to a post-treatment, for example.

Examples of suitable plasticizers include lignosulfonates, sulfonated naphthalene-formaldehyde condensates, sulfonated melamine-formaldehyde condensates, sulfonated vinylcopolymers, polyalkylene glycols having phosphonate groups, polyalkylene glycols having phosphate groups, polycarboxylates or polycarboxylate ethers, or mixtures of the stated plasticizers; polycarboxylate ethers are understood to comprise comb polymers having anionic groups on the polymer backbone and having polyalkylene oxide side chains, the anionic groups being selected in particular from carboxylate groups, sulfonate groups, phosphonate groups, or phosphate groups.

A shrinkage reducer can e.g. be selected from polyoxyalkylenes, alkylamines, and/or oxyalkylamines.

Especially, the first and/or the second curable mineral binder composition comprises a mineral binder and aggregates, especially sand. Thereby, preferably, a weight ratio of the aggregates to the mineral binder is from 5:1 - 1:2, especially 4:1 - 1.2:1.

Particularly, the proportion of water in the first and/or the second curable mineral binder composition is 25 - 70 wt.%, especially 30 - 50 wt.%, particularly 35 - 45 wt.%, with respect to the total weight of the mineral binder in the mineral binder composition.

In some embodiments, the second curable mineral binder composition comprises the same type of mineral binder and the same type of aggregates as the first curable mineral binder composition, whereby preferably the weight proportions of the mineral binders and the aggregates are identical in the two curable mineral binder compositions.

Particularly, in terms of the solid components, the second curable mineral binder composition is identical with the first curable mineral binder composition.

Thereby, the curable mineral binder composition can for example be produced from one and the same dry mortar or concrete composition. This makes the overall process more efficient and the chemical and/or physical difference between the two curable mineral binder compositions can e.g. be produced by different proportions of water, different additives and/or different proportions of additives.

Thus, particularly, the second curable mineral binder composition differs from the first mineral binder composition, especially exclusively, in the proportion of water, the type of one or more additives and/or proportion of one or more additives.

In some embodiments, a proportion of water to the mineral binder in the first curable mineral binder composition is lower than in the second curable mineral binder composition. This allows for producing a second curable mineral binder composition that is more fluid than the first one.

In some preferred embodiments, the proportion of an accelerator in the first curable mineral binder composition is higher than in the second curable mineral binder composition.

Particularly, the second curable mineral binder composition has a lower viscosity, especially a lower yield stress than the first mineral binder composition.

Curable mineral binder compositions with good flowability and/or low viscosity are highly suitable for filling a space, e.g. inside the circumferential side wall. However, for producing the circumferential side wall by additive manufacturing in step a) of the method, a curable mineral binder composition with higher viscosity and/ lower flowability is more suitable.

Especially preferred, the second curable mineral binder composition is a self-levelling composition. Self-levelling compositions are very fluid mineral binder compositions than can be placed and tightened under the alone effect of gravity, especially without calling for any vibrations.

Particularly, the self-levelling composition has a consistency class of at least S4, especially S5, and/or it has as slump of 160 - 210 mm, especially >_ 220 mm, according to EN 206-1:2013 + A1 2016.

A consistency class of the first mineral binder composition preferably is S1, S2 or S3 and/or it has a slump of at most 150 mm, according to EN 206-1:2013 + A1 2016.

The first and second curable mineral binder compositions in the setting state are preferably produced by mixing their constituents in a mixing unit and conveyed via a supply line to the printing head. Preferably, the curable mineral binder composition in the setting state are continuously produced, especially during the application of the curable mineral binder compositions.

The mixing unit is particularly designed as a continuous mixer and comprises an integrated conveying device in the form of a screw conveyor. In one advantageous development, the screw conveyor has at least one, preferably at least two turns.

In the mixing unit, individually metered components are mixed together and conveyed into the supply line attached to an outlet side of the mixing unit. In operation, the mixing and conveying of the curable binder compositions can take place continuously.

The additive manufacturing device preferably comprises one or more further conveying elements, particularly a pump, for feeding the printing head with the first and/or second curable mineral binder composition in the setting state.

In some embodiments, both the first and second curable mineral binder compositions are produced in the same mixing unit of the additive manufacturing device.

The first curable mineral binder composition can be produced with a first additive and the second mineral binder composition with a second additive, whereby the first and the second additive are chemically different. Furthermore, the first and second curable mineral binder compositions can contain the same additive, particularly an accelerator, in different amounts.

The additive manufacturing device can comprise two separate inlets for introducing the two different additives separately into the mixing unit and/or a switchable valve, which allows for introducing either the first or the second additive.

In some embodiments, the method comprises a further step of:
- Adding one or more additives, particularly an accelerator, to the first and/or second curable binder composition in the setting state in the print head and/or in the supply line, preferably in the print head.

In some preferred embodiments, the additive is an accelerator and the proportion of the additive added to the first curable mineral binder composition the setting state is higher and the proportion of the additive added to the second curable mineral binder composition.

In some embodiments, the method comprises a further step of:
- Before application by means of the printing head, mixing the first curable mineral binder composition in the setting state and/or the second curable binder composition in the setting state with at least one dynamic mixer arranged between a print head outlet and the supply line.

The term "dynamic mixer" refers to a mixing device whereby the mixing is effected by at least one moving mixing element. In contrast, a static mixer is a mixing device without any moving mixing elements.

Especially, the dynamic mixer is arranged between the printing head outlet and an additive supply device if the latter is present. Particularly, the dynamic mixer is arranged in the printing head.

A further aspect of the present invention is directed to a curable mineral binder based 3D object obtainable by a method as described herein.

This summary is provided to introduce a selection of concepts in a simplified form that are further described below in the Detailed Description of Embodiments.

### Brief Description of the Drawings

Various embodiments in accordance with the present disclosure will be described with reference to the drawings, in which:
- Fig. 1: shows an exemplary additive manufacturing device while producing a circumferential side wall of an exemplary 3D object;
- Fig. 2: shows the device from figure 1 while producing a base of the 3D object;
- Fig. 3: shows the device from figure 1 while producing a circumferential side wall of another exemplary 3D object;
- Fig. 4: shows the device from figure 3 while producing a base of the 3D object from figure 3, wherein the given base is more massive than the one shown in figure 2 and the printing head comprises a fill level sensor;
- Fig. 5: shows another exemplary 3D object, of which the base is produced, the base having a drain hole printed therein;
- Fig. 6: shows yet another exemplary 3D object, of which the base is produced on a surface that is shaped three-dimensionally, the base having three drain holes printed therein;
- Fig. 7: shows a further exemplary 3D object, of which the base is produced on a surface that has recesses for anchoring the base; and

### Detailed Description of Embodiments

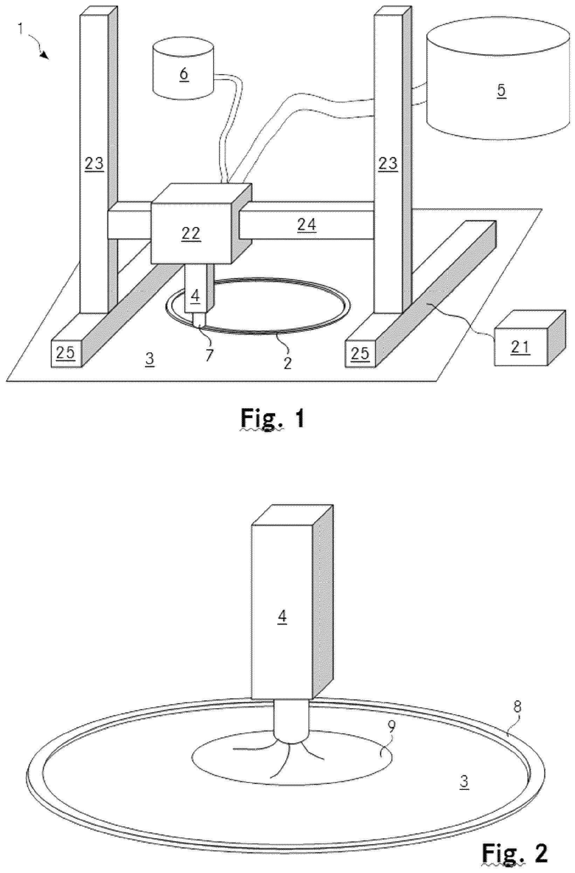

Figure 1 shows an exemplary 3D printing arrangement with an additive manufacturing device 1 that is used for producing a 3D object 2 on a surface 3. The object 2 is made of a curable mineral binder composition.

The inventive method relates to the production of 3D objects with a circumferential side wall and a base. The shown exemplary object 2 is an unfinished container, i.e. the first layer of its circumferential side wall has already been printed. For this side wall, layer after layer is printed at a constant or variable angle relative to the surface 3 that is not zero, in other words: oblique or in some cases perpendicular to the surface. These layers are made of a curable mineral binder composition that is fed by the movable printing head 4 of the additive manufacturing device 1. In the shown example, the additive manufacturing device 1 has a gantry design. The invention is, however, not limited to use of such designs. Also applicable are e.g. articulated arm mechanisms (also known as robot printers).

In the shown gantry robot 1, the elements 23 can move horizontally along the elements 25, and the element 24 can move vertically along the elements 23. The element 22 (which in this case is also a dosing unit) can move horizontally along the element 24. In some embodiments, the printing head 4 is additionally movable along the vertical and/or pivotable around any desired axis to improve access of places of the work piece that are difficult to reach. The computer or control unit 21 is connected to the additive manufacturing device 1 and is configured to control all said movabilities of said elements. That way, the 3D coordinates of the to-be-printed object can be moved to while the control unit 21 is also controlling the output flow rate of the printing head 4 and the dosing.

The curable mineral binder composition used for the circumferential side wall, termed herein as the "first" curable mineral binder composition, is configured for 3D printing, i.e. it is curing relatively fast in order to stabilize the printed structure as soon as possible such that the next layer can be printed on top of the previous layer without causing a collapse of the structure. In the shown example, the basic material for the first curable mineral binder composition comes from the first material source 5, wherein an additive (e.g. accelerator) that controls the curing speed of the composition comes from the second material source 6.

In order to allow a quick change in the composition to provide a fast curing mineral binder material and a slow curing (in particular self-leveling) mineral binder material, the final mixture is provided in the printing head, where the material from the source 5 and the material from the source 6 come together. The control unit 21 is programmed to control the dosing unit 22 of the additive manufacturing device 1. The dosing unit 22 may define the ratio of the mineral binder composition from source 5 and the additive (accelerator) from source 6. Alternatively, the flowrate of the additive (accelerator) from source 6 can be adjusted independently from the flowrate of the basic material from source 5. Furthermore, the print head 4 can include a separate inlet for the additive (accelerator) from source 6 and the dosing unit 22 may only be used to adjust the flowrate of the mineral binder composition from source 5.

Mixing the curable mineral binder and the additive responsible for the degree of curing speed so close before the nozzle 7 outlet of the printing head 4 makes sure that the additive manufacturing device 1 can quickly react to a change in material requirements and to switch as quickly as possible from one composition to another.

Alternatively, and in a different interpretation of figure 1, source 6 could contain the first curable mineral binder composition that is curing quickly and is used for printing the circumferential side wall, and source 5 could contain a second curable mineral binder composition that is curing more slowly and is used for producing the base of the 3D object and potentially a whole filling of it. Both compositions reach the dosing unit 22 via flexible tubes as shown and the control unit 21 is configured to switch between the two sources, so that as quickly as possible the desired composition comes out of the nozzle 7.

In general, the material is transported through each of the tubes by a conveying elements that e.g. are arranged in the respective source 5/6.

The nozzle 7 of the printing head 4 can be shaped in a specific way to give each layer of the circumferential side wall a desired preform that, in particular, may anticipate small leveling movements of the first composition to make sure it hardens in an intended shape.

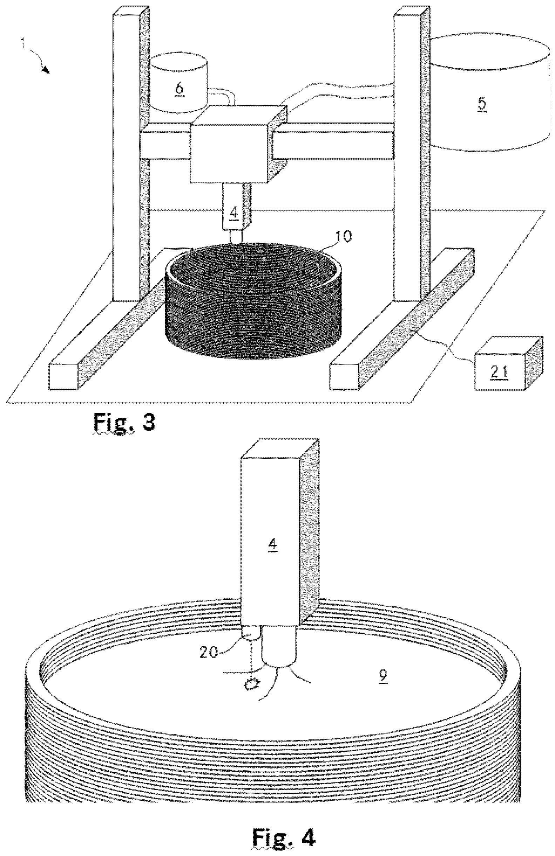

In some embodiments, before the base of the 3D object is produced, at least one layer of the circumferential side wall is needed as shown in figure 1 and 2. Moving on to figure 2, this first layer 8 serves as a boundary for the step of producing the base. The second curable mineral binder composition 9 is applied onto the surface with the movable printing head 4. The second curable mineral binder 9 has a more liquid consistency, is thus self-leveling, and needs longer time to cure. Before the second composition 9 spills over the first layer 8, the printing head 4 stops feeding the second composition. The second composition of the base is now abutting on the first layer of the circumferential side wall. The circumferential side wall can then be continued to be built up, which is shown in figure 3. The abutting side wall and base are bonding very well as they are based on the same basic material.

Figure 4 shows a base production that is either alternative to the one shown in figure 2 or comes in addition, e.g. after the thin base layer of figure 2 is fully cured. In other words, the base as to be understood in context of the present invention can be a relatively thin bottom layer, in particular up to the thickness of one or more side wall layers, or a partial or total filling of the interior of the circumferential side wall 10. The object shown in figure 4 can therefore be a container with a relatively massive and heavy bottom (e.g. to protect the container from being blown over by strong winds) or a pillar as needed in buildings to support entire ceilings.

As such, the production of the 3D object can also comprise alternating stages of side wall production and base production so that for example whenever the side wall has cured sufficiently, a next portion of base filling can be poured into the interior. This type of production pattern accelerates the overall curing time as the second composition will have increased air contact.

As also shown in figure 4, the additive manufacturing device may comprise a sensor 20 which is used, while producing the base, for detecting the actual level of the second curable mineral binder composition relative to the surface. For that, the coordinates of the surface level is stored in a control unit of the additive manufacturing device. The sensor 20 can be, as shown, an optical distance meter that measures the distance based on the time of flight. In other embodiments, the sensor could for example be acoustical or based on ultra sonic or radar.

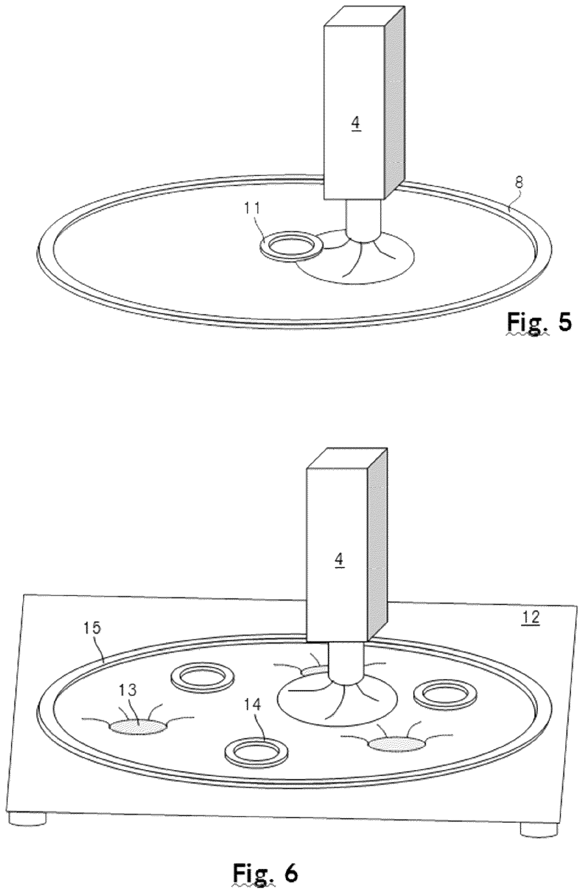

Figure 5 shows a variation of the embodiment as shown in figure 2. In the method of producing an object that will be a container, e.g. a plant pot, an additional circumferential layer 11 of the first composition is printed which is smaller in its planar dimensions than the first layer 8 of the circumferential side wall and, therefore, fits into its interior. This layer 11 could later serve as a drain hole for the container. After these two rings 8 and 11 are printed, the printing head 4 then "fills" the circumferential space between them. It is noted that at least one of the rings 8 and 11 might as well be composed of two or more layers of the applied material. Instead of the small middle ring 11, various shapes of drainage holes are possible, such as e.g. a slot that is straight or waved with a waveform along the plane of the surface.

Figure 6 shows yet another embodiment of the invention where a temporary support 12 is used as a surface. The reason for that is the possibility to easily generate a desired shape of the lower side of the base, which can be realized with the second composition (as shown) but also could this kind of base be printed with the first composition.

As can be seen in figure 6, the support 12 provides three-dimensionally shaped support elements 13. These elements 13 are indentations causing the base to form feet that the container can stand on after it is produced. This raise allows ventilation of the container bottom in order to prevent e.g. moss formation or dirt collection. Particularly, in case optional drain holes are provided by rings 14 as shown here, the raise further allows easier drain of the excess water out of the container and to avoid root rot of a plant in the container.

The step of producing the base of the object thus includes in the example shown in figure 6 the provision of at least one ring 14 made of the first curable mineral binder composition within the circumference defined by at least one layer 15 of the side wall. Contrary to what is shown in the figure, the second curable mineral binder composition can also be poured in after the side wall is raised completely or in part. However, to better display the scene of producing the base, figure 6 only shows one layer 15 of the side wall.

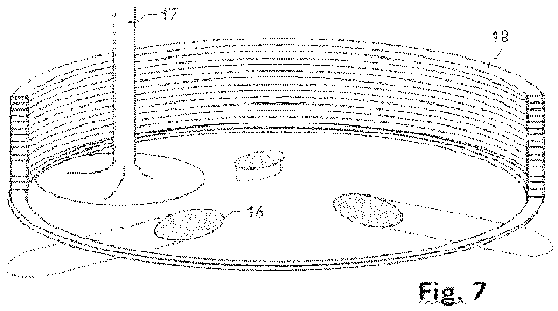

Figure 7 shows a variation of the embodiment shown in figures 3 and 4. The surface on which the base is produced provides three recesses 16 each embodied as a drilled hole. The second composition 17 that is poured into the interior of the circumferential sidewall 18 by the additive manufacturing device also fills the holes 16 and therefore, when cured, forms one connected structure with the filling above surface. This increases the stability of the 3D object enabled by anchoring the object to an underlying structure, such as a floor. As a recess for anchoring the 3D object, holes other than drillings, an undercutting, or a subtractively manufactured structure can be considered likewise.

The invention is shown with embodiments of a tubular or a cylindrical container but is also applicable to more complex structures such as hollow walls of a 3D printed house. In such constructions, the invention is particularly advantageous as the coordinated and computer controlled filling of the hollow 3D object with self-leveling mortar to form a base saves an enormous amount of manual effort and time. For example, the usual height of a house wall section (floor to ceiling) is about between 2.5 meters and 3 meters which would need to be accessed by a human worker and/or by a cement feed pipe which needs to be positioned manually. These manual or semi-manual fillings further have the disadvantage that the filling material is usually not fed vertically but under an angle that causes the filling material to pour against the inside wall surface, which could destabilize the wall structure depending on the feeding pressure and the curing status of the side wall. Also, the additive manufacturing device can distribute the second composition along the course of the wall.

The method of producing a 3D object by additive manufacturing and having a circumferential side wall and a base usually includes steps that are highly manual, exhausting, error-prone, and tedious. It is non-digital, therefore cannot be controlled by machines and computers. Another problem in the art is that the self-leveling mortar poured into the walls of a printed hollow object is made of a different mix or slow set which does not provide a bond as good as if the same base material would be used as in the present invention.

The advantages provided by the invention comprise savings in time and work, increases in productivity, durability, precision, stability, process robustness, and repeatability. In preferred embodiments, the two curable mineral binder compositions used are similar and differ only in the concentration of components controlling the curing speed of the compositions. The process according to the invention is digital and can thus be integrated in the numerical code that controls the additive manufacturing device. As such, the printing head can right after producing the required height of the circumferential side wall continue to fill the hollow structure with a self-leveling version of the side wall material to form the base. The invention therefore allows for a fully automated production of 3D objects having a circumferential side wall and a base.

For example, the first and second curable mineral binder compositions can be based on a SikaCrete^{®}-7100 3D composition, which is a multi-component fiber-containing micro-concrete ink system developed for 3D printing comprising a dry mortar composition with Portland cement, sand, and a plasticizing polymer admixture. In an exemplary embodiment, different amounts of an accelerator are added, particularly in the printing head, to the first and second curable mineral binder compositions to provide a fast curing first curable mineral binder composition and a self-leveling second curable mineral binder composition.

In various embodiments, the invention allows similar advantages by printing the base with the same basic composition that the circumferential side wall is printed with. This way, a base can be provided for containers such as plant pots which used to be only available without a base. For example, for a 3D object that has a first layer of its circular side wall, the bottom can be printed by moving the printing head spirally while applying the first curable mineral binder. This can be started from the center (spirally moving outside) or from the edge (spirally moving inside). Printing the base like this is carried out before producing the circumferential side wall to any extent, or after at least one layer of the first curable mineral binder composition is applied for printing the circumferential side wall (however, the partial side wall must be so low that the nozzle of the printing head can still reach its operating range above the surface).

Usually, the base being printed with the same material that the circumferential side wall is made of should result in a comprehensively covering print without any air gaps. To really make sure that there are no gaps left, a self-leveling composition (also called herein "second curable mineral binder composition") can be poured over this printed base while the 3D object is still standing on the surface so that any gap that may remain is filled, similar to the setup in figure 2.

Another way to avoid any gaps is to use a composition that has properties between fast curing and self-leveling, i.e. a third curable mineral binder composition that will settle to some extend but will still cure so fast that the printed tracks can be specifically positioned by the additive manufacturing device and can still be recognized after curing.

In case the container should be equipped with a drain hole, circles similar to the ones used in the embodiments of figures 5 and 6 can be provided, wherein the space between the hole(s) and the circumference of the side wall on the surface is filled by printing abutting tracks on the surface, e.g. in a spiral pattern or a meander pattern.

Although the invention is illustrated above, partly with reference to some preferred embodiments, it must be understood that numerous modifications and combinations of different features of the embodiments can be made. All of these modifications lie within the scope of the appended claims.

### List of reference numerals

| | |
|---|---|
| 1 | additive manufacturing device |
| 2 | 3D object |
| 3, 12 | surface (support) |
| 4 | printing head |
| 5,6 | sources |
| 7 | nozzle |
| 8, 15 | first layer of circumferential side wall |
| 9, 17 | second curable mineral binder composition |
| 10, 18 | circumferential side wall |
| 11,14 | circumferential element (ring) |
| 13 | support elements |
| 16 | recess |
| 20 | sensor |
| 21 | control unit (computer) |
| 22 | dosing unit |
| 23, 24, 25 | gantry elements |

## Claims

1. A method for producing on a surface (3,12) a curable mineral binder based 3D object (2) having a circumferential side wall (8,10,15,18) and a base with an additive manufacturing device (1), the method comprising the steps of:
a) producing the circumferential side wall (8,10,15,18) by applying, at a non-zero angle relative to the surface (3,12), a plurality of layers of a first curable mineral binder composition with a movable printing (4) head of the additive manufacturing device (1);
b) producing the base by applying onto the surface (3,12) at least one of the first curable mineral binder composition and a second curable mineral binder composition (9,17) with the movable printing head (4);
wherein producing the circumferential side wall (8,10,15,18) and producing the base are carried out such that the base is abutting the circumferential side wall (8,10,15,18).

2. The method according to claim 1, wherein producing the base is carried out by applying the first curable mineral binder composition.

3. The method according to claim 2, wherein producing the base includes spirally moving the printing head while applying the first curable mineral binder composition.

4. The method according any of the claims 1 to 3, wherein producing the base is carried out before producing the circumferential side wall (8,10,15,18).

5. The method according any of the claims 1 to 3, wherein producing the base is carried out after at least one layer of the first curable mineral binder composition is applied.

6. The method according to claim 1, wherein producing the base is carried out
after at least one layer of the circumferential side wall (8,10,15,18) is applied, and by applying the second curable mineral binder composition (9,17) in the interior of the at least one layer of the circumferential side wall (8,10,15,18).

7. The method according to claim 1 or 6, wherein, for achieving a self-leveling effect, the second curable mineral binder composition (9,17) has a lower viscosity and/or yield stress than the first curable mineral binder composition.

8. The method according to claim 7, wherein the second curable mineral binder composition (9,17) contains a lower concentration of an accelerator than the first curable mineral binder composition.

9. The method according to any of claims 6 to 8, wherein the first curable mineral binder composition and the second curable mineral binder composition (9,17) are based on the same type of mineral binder.

10. The method according to any of claims 6 to 9, wherein, for anchoring the 3D object (2), the surface (3) has at least one recess (16) comprising at least one of a hole, an undercutting, a subtractively manufactured structure, or a drilling.

11. The method according to any of claims 6 to 10, wherein producing the base includes producing a circumferential element (11,14) onto the surface (3,12) and in the interior of the at least one layer of the circumferential side wall (8,10,15,18) by applying the first curable mineral binder composition with the movable printing head (4) of the additive manufacturing device (1).

12. The method according to any of claims 6 to 11, wherein producing the base includes detecting with a sensor (20) an actual level of the second curable mineral binder composition (9,17) relative to the surface (3,12).

13. The method according to any of the preceding claims, wherein the surface (3,12) is provided by a three-dimensionally shaped support element (13).

14. A curable mineral binder based 3D object (2) obtainable by a method according to any of the preceding claims.
